# EUROPÄISCHE PATENTSCHRIFT

(11) **EP 0 518 092 B1**
(45) Veröffentlichungstag und Bekanntmachung des Hinweises auf die Patenterteilung: **11.03.1998**
(21) Anmeldenummer: 92108558.5
(22) Anmeldetag: 21.05.1992
(51) Int. Cl.: C08F 4/622, C08F 10/00

(54) **Isolierbares, geträgertes Katalysatorsystem zur Polymerisation von C2-bis C10-Alk-1-enen**
Catalyst system on carrier which may be isolated, for polymerisation of C2- to C10 1-alcenes
Système catalytique supporté et isolable, pour polymérisation de C2 à C10-1-alcènes

(30) Priorität: 12.06.1991 DE 4119343
(43) Veröffentlichungstag der Anmeldung: 16.12.1992
(73) Patentinhaber: BASF Aktiengesellschaft, 67063 Ludwigshafen (DE)
(72) Erfinder: Schlund, Rueger, Dr., W-6800 Mannheim 1 (DE); Rieger, Bernhard, Dr., W-7401 Nehren (DE)

(56) Entgegenhaltungen:
- EP-A- 0 295 312
- WO-A-92/05203

## Beschreibung

Die vorliegende Erfindung betrifft isolierte, geträgerte Katalysatorsysteme zur Polymerisation von C₂- bis C₁₀-Alk-1-enen, enthaltend als aktive Bestandteile eine Komplexverbindung von Metallen der IV. und V. Nebengruppe des Periodensystems und eine oligomere Alumoxanverbindung, erhältlich durch a) Vermischen der Komplexverbindung von Metallen der IV. und V. Nebengruppe des Periodensystems der Formel I 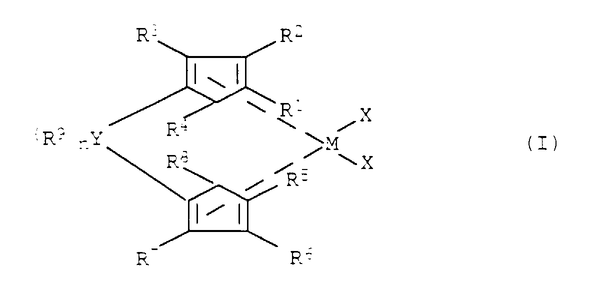 in der die Substituenten folgende Bedeutung haben:
- R¹ bis R³, R⁵ bis R⁷: Wasserstoff, C₁- bis C₁₀-Alkyl, 5- bis 7-gliedriges Cycloalkyl, das seinerseits ein C₁-bis C₆-Alkyl als Substituent tragen kann, C₆- bis C₁₅-Aryl oder Arylalkyl, wobei gegebenenfalls auch zwei benachbarte Reste R¹ und R², R² und R³, R⁵ und R⁶ und R⁷ gemeinsam für ungesättigte, 4 bis 15 C-Atome aufweisende cyclische Gruppen stehen können,
- R⁴ , R⁸: Wasserstoff, C₁- bis C₄-Alkyl,
- R⁹: C₁- bis C₈-Alkyl, C₃- bis C₁₀-Cycloalkyl, C₆- bis C₁₀-Aryl,
- M: Titan, Zirkonium, Hafnium, Vanadium, Niob, Tantal,
- Y: Silicium, Germanium, Zinn, Schwefel, Kohlenstoff
- X: Fluor, Chlor, Brom, Jod oder C₁- bis C₈-Alkyl
und n für die Zahlen 0, 1 oder 2 steht, mit einer Lösung der oligomeren Alumoxanverbindung, und b) anschließendes Vereinigen des so erhaltenen Gemischs mit feinteiligem Polymerisat und Verdampfen des Lösungsmittels.

Außerdem betrifft die Erfindung ein Verfahren zur Herstellung der erfindungsgemäßen Katalysatorsysteme sowie ein Verfahren zur Herstellung von Polymerisaten von C₂- bis C₁₀-Alk-1-enen.

Für die Polymerisation von Alk-1-enen können neben den unlöslichen Ziegler-Natta-Katalysatoren auch lösliche Katalysatorsysteme verwendet werden. Bei letzteren handelt es sich um Komplexverbindungen von Metallen der IV. und V. Nebengruppe des Periodensystems mit organischen Liganden, die in Verbindung mit oligomeren Aluminiumverbindungen eingesetzt werden (EP-A 185 918, EP-A 283 739 und GB-A 2 207 136). Die bei diesen Katalysatorsystemen verwendeten Komplexverbindungen enthalten als organische Liganden meist Cyclopentadienylgruppen, die mit dem Übergangsmetall π-Bindungen eingehen. Häufig werden als Katalysatoren auch solche Übergangsmetallkomplexe verwendet, die neben organischen Liganden noch an das Metallatom gebundene Halogene aufweisen.

Diese löslichen Katalysatorsysteme sind jedoch für die Polymerisation von Alk-1-enen in der Gasphase nur bedingt geeignet, weil zur Polymerisation von gasförmigen Monomeren die Katalysatorbestandteile in der Regel in festem Zustand vorliegen müssen.

In der EP-A 354 893 wird ein Katalysatorsystem aus einer Komplexverbindung von Metallen der IV. und V. Nebengruppe des Periodensystems und einer oligmeren Alumoxanverbindung beschrieben, welches vor der eigentlichen Polymerisation durch einen Vorpolymerisationsschritt mit Polyolefinen in Kontakt gebracht wird. Das dabei erhaltene Katalysatorsystem wird nicht isoliert, sondern unmittelbar nach seiner Herstellung noch im gleichen Reaktor weiterverwendet, d. h. als Katalysator zur Polymerisation von Alk-1-enen eingesetzt. Da aus verfahrenstechnischen Gründen Katalysatorsysteme zur Gasphasenpolymerisation von Alk-1-enen isolierbar und in der Regel auch lagerungsfähig sein sollten, ist das in der EP-A 354 893 beschriebene Katalysatorsystem in der Anwendung im wesentlichen auf Lösungspolymerisationen und Suspensionspolymerisationen beschränkt.

Weiterhin sind aus der EP-A 381 184 und der EP-A 384 171 Katalysatorsysteme zur Polymerisation von Alk-1-enen bekannt, die neben einer Komplexverbindung von Metallen der IV. und V. Nebengruppe des Periodensystems und einer Aluminiumverbindung noch einen Träger enthalten, der ein Oxid des Siliciums oder des Aluminiums bzw. ein Polymerisat des Styrols oder des Ethylens ist. Auch in diesen Fällen werden die Katalysatorsysteme als solche nicht isoliert, so daß es nicht möglich ist, die eigentliche Polymerisation getrennt von der Herstellung des Katalysators durchzuführen.

Desweiteren werden in den Offenlegungsschriften EP-A 279 863 und EP-A 295 312 Katalysatorsysteme zur Polymerisation von Alk-1-enen beschrieben, die aus einer Komplexverbindung von Metallen der IV. und V. Nebengruppe des Periodensystems, einer oligomeren Alumoxanverbindung und einem anorganischen oder organischen Träger, beispielsweise Siliciumdioxid oder einem Polyolefin, bestehen. Diese Katalysatorsysteme werden insbesondere zur Polymerisation von Ethylen verwendet. Zur Erhöhung der Produktivität werden diese Katalysatorsysteme nach ihrer Herstellung und noch vor der eigentlichen Polymerisation einem zusätzlichen Vorpolymerisationsschritt ausgesetzt, der jedoch die Herstellung des Katalysatorsystems aufwendiger gestaltet.

Der vorliegenden Erfindung lag daher die Aufgabe zugrunde, den geschilderten Nachteilen abzuhelfen und ein geträgertes Katalysatorsystem zu entwickeln, welches gut isolierbar und lagerfähig ist, sich sowohl für die Suspensionspolymerisation, die Lösungspolymerisation als auch für die Gasphasenpolymerisation eignet und darüber hinaus nach einem möglichst wenig aufwendigen Verfahren hergestellt werden kann.

Demgemäß wurden die eingangs definierten geträgerten Katalysatorsysteme gefunden.

Die erfindungsgemäßen, geträgerten Katalysatorsysteme enthalten als aktiven Bestandteil u.a. eine Komplexverbindung von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über π-Bindungen mit ungesättigten cyclischen Kohlenwasserstoffatomen verbunden ist, beispielsweise Cyclopentandienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom, Jod oder einem C₁- bis C₈-Alkyl, beispielsweise einer Methyl-, Ethyl-, Propyl- oder Butylgruppe, verknüpft sein kann. Besonders geeignete Komplexverbindungen enthalten dabei insbesondere Chlor oder Brom.

Bevorzugt steht n in der allgemeinen Formel I für die Zahl zwei.

Beispiele für besonders geeignete Komplexverbindungen der Formel I sind u.a.
Dimethylsilandiylbis(-3-tert.butyl-5-methylcyclopentadienyl)-zirkoniumdichlorid,
Diethylsilandiylbis(-3-tert.-Butyl-5-methylcyclopentadienyl)-zirkoniumdichlorid,
Methylethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid
Dimethylsilandiylbis(-3-tert.pentyl-5-methylcyclopentadienyl)-zirkoniumdichlorid
Dimethylsilandiylbis(-3-tert.butyl-5-methylcyclopentadienyl)-dimethylzirkonium,
Dimethylsilandiylbis(-2-methylindenyl)-zirkoniumdichlorid,
Diethylsilandiylbis(-2-methylindenyl)-zirkoniumdichlorid,
Dimethylsilandiylbis(-2-ethylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsulfidbis(-2-methylindenyl)-zirkoniumdichlorid,
Dimethylsilandiylbis(-2-methyl-5-methylcyclopentadienyl)-zirkoniumdichlorid,
Dimethylsilandiylbis(-2-methyl-5-ethylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylindanyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, vanadium, Niob oder Tantal, bevorzugt ist. Beispiele für entsprechende Herstellungsverfahren sind u.a. im Journal of Organometallic Chemistry, 369 (1989), 359-370 beschrieben.

Neben der Komplexverbindung enthält das erfindungsgemäße Katalysatorsystem noch oligomere Alumoxanverbindungen der allgemeinen Formel II oder III 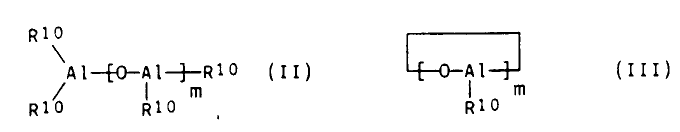 wobei R¹⁰ bevorzugt für Methyl- oder Ethylgruppen und m bevorzugt für eine Zahl von 10 bis 25 steht.

Die Herstellung dieser oligomeren Alumoxanverbindungen erfolgt üblicherweise durch umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindung kann außerdem noch Trialkylaluminiumverbindungen enthalten, deren Alkylgruppen jeweils 1 bis 8 C-Atome aufweisen, beispielsweise Trimethyl-, Triethyl- oder Methyldiethylaluminium.

Bei der Polymerisation von C₂- bis C₁₀-Alk-1-enen mit Hilfe des erfindungsgemäßen Katalysatorsystems ist es vorteilhaft, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem übergangsmetall aus der Komplexverbindung von Metallen der IV. und V. Nebengruppe des Periodensystems im Bereich von 10:1 bis 10⁶:1, insbesondere im Bereich von 10:1 bis 10⁴:1 liegt.

Erfindungsgemäß wird vor der Polymerisation zunächst die Komplexverbindung von Metallen der IV. und V. Nebengruppe des Periodensystems mit der oligomeren Alumoxanverbindung vermischt, wodurch sich ein aktiviertes Katalysatorsystem bildet. Die Dauer dieses Aktivierungsschrittes beträgt üblicherweise 1 bis 120 Minuten, vorzugsweise 10 bis 100 Minuten. Die Vermischung wird bevorzugt in der Weise durchgeführt, daß man die Komplexverbindung mit einer Lösung der oligomeren Alumoxanverbindung in einem inerten Lösungsmittel, beispielsweise in Benzol, Toluol, Hexan oder Heptan, bei Temperaturen von 0 bis 50°C in Kontakt bringt.

Anschließend wird die dabei erhältliche Lösung auf einem feinteiligen Polymerisat aufgebracht. Dabei wird in einem ersten Schritt das feinteilige Polymerisat mit der aus dem Aktivierungsschritt erhältlichen Lösung aus der oligomeren Alumoxanverbindung und der Komplexverbindung vereinigt und 1 bis 120 Minuten, insbesondere 10 bis 60 Minuten, lang bei einer Temperatur von 10 bis 50°C gerührt. Danach wird in einem zweiten Schritt das Lösungsmittel durch Verdampfen entfernt, so daß ein festes, geträgertes Katalysatorsystem isoliert werden kann. vorzugsweise verwendet man zur Herstellung des erfindungsgemäßen Katalysatorsystems feinteilige Polymerisate mit einer durchschnittlichen Korngrößenverteilung von 0,01 bis 1,0 mm, insbesondere von 0,1 bis 0,5 mm. Dafür gut geeignete Polymerisate sind insbesondere Polyvinylchlorid, Polystyrol und Polyolefine, speziell Polypropylen.

Mit Hilfe dieser isolierbaren geträgerten Katalysatorsysteme lassen sich Polymerisate von Alk-1-enen herstellen. Darunter werden Homo- und Copolymerisate von C₂- bis C₁₀-Alk-1-enen verstanden, wobei als Monomere vorzugsweise Ethylen, Propylen, But-1-en, Pent-1-en und Hex-1-en verwendet werden. Die erfindungsgemäßen Katalysatorsysteme eignen sich insbesondere zur Herstellung von Polypropylen und von Copolymerisaten des Propylens mit untergeordneten Anteilen anderer C₂- bis C₁₀-Alk-1-ene, insbesondere von Ethylen und But-1-en.

Die Herstellung dieser Polymerisate kann in den üblichen, für die Polymerisation von Alk-1-enen verwendeten Reaktoren entweder absatzweise oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisation wird bei Drücken von 1 bis 3000 bar und Temperaturen von 0 bis 300°C durchgeführt. Bevorzugt sind dabei Drücke von 1 bis 2500 bar und Temperaturen von 0 bis +150°C. Die Polymerisationszeit beträgt üblicherweise 0,5 bis 10 Stunden.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. In diesem Fall ist es vorteilhaft, wenn man pro Liter des Lösungsmittels 10⁻⁴ bis 10⁻¹ mol Aluminium als Alumoxan verwendet. Polymerisate mit guten anwendungstechnischen Eigenschaften sind auch bei der Polymerisation in der Gasphase, in in einer Suspension und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Weiterhin ist es möglich, bei der Polymerisation neben dem erfindungsgemäßen geträgerten Katalysatorsystem aus der Komplexverbindung und der oligomeren Alumoxanverbindung noch weiteres oligomeres Alumoxan in Form einer Lösung in einem inerten Kohlenwasserstoff, beispielsweise in Heptan, zu verwenden. Auch in diesem Fall kann die oligomere Alumoxanverbindung noch Trialkylaluminiumverbindungen enthalten, deren Alkylgruppen jeweils 1 bis 8 C-Atome aufweisen, beispielsweise Trimethyl-, Triethyl- oder Methyldiethylaluminium.

Die mit Hilfe des erfindungsgemäßen, geträgerten Katalysatorsystems hergestellten Polymerisate zeichen sich durch einen relativ hohen Schmelzpunkt und verringerte Anteile von Feinstaub (Polymerisate mit einer Korngröße von weniger als 0,125 mm) aus. Dies gilt insbesondere für solche Polymerisate, die durch Gasphasenpolymerisation hergestellt werden. Die erfindungsgemäßen, geträgerten Katalysatorsysteme lassen sich isolieren und über längere Zeiträume (z.B. einige Monate) lagern, ohne daß dabei die gute Produktivität dieser Systeme nennenswert absinkt. Aufgrund dieser Eigenschaft eignen sich die erfindungsgemäßen Katalysatorsysteme insbesondere auch für die Gasphasenpolymerisation von Alk-1-enen. Die dabei erhältlichen Polymerisate von C₂- bis C₁₀-Alk-1-enen lassen sich vor allem zur Herstellung von Folien und Formkörpern verwenden.

### Beispiel 1

A. Voraktivierung
   11,9 mg (0,026 mmol) Dimethylsilandiylbis(-indenyl)zirkoniumdichlorid wurden in einem 0,1 l-Glaskolben zu einer 1,6 molaren Lösung von Methyl-) alumoxan (durchschnittliche Kettenlänge m = 17) in 6,6 ml Toluol gegeben. Die beiden Katalysatorkomponenten wurden anschließend 20 Minuten bei 20°C gerührt. Die dabei erhaltene Lösung wies ein atomares Verhältnis zwischen Aluminium und Zirkonium von 406:1 auf.
5 B. Trägerung
   2 g eines Polypropylengrießes mit einer durchschnittlichen Korngrößenverteilung von 0,25 bis 0,5 mm wurden in einem 0,1 l-Glaskolben in 10 ml Toluol suspendiert, anschließend mit 6,6 ml der aus dem Voraktivierungsschritt erhaltenen Lösung vereinigt und bei 20°C 30 Minuten lang gerührt. Danach wurde das Toluol bei 20°C und einem Druck von ca. 0,01 bar abgezogen.
   Dabei erhielt man ein geträgertes Katalysatorsystem aus 2 g Polypropylengrieß und 0,4 g des eigentlichen Katalysators aus dem Zirkoniumkomplex und dem Methylalumoxan. Das geträgerte Katalysatorsystem konnte 2 Monate lang aufbewahrt werden, ohne daß dabei seine Aktivität merklich abnahm.
C. Polymerisation
   In einem Rührautoklaven mit einem Nutzvolumen von 10 1 wurden 2,4 g des aus B erhaltenen, geträgerten Katalysatorsystems zusammen mit einer Suspension aus 0,9 g des gleichen, in A verwendeten Methylalumoxans in 20 ml Heptan vorgelegt. Das atomare Verhältnis zwischen Aluminium und Zirkonium betrug im Polymerisationsreaktor 1200:1. Anschließend wurde in Anwesenheit von ca. 7 l flüssigem Propylen bei einer Temperatur von 50°C, einem Druck von 20,5 bar und einer Polymerisationsdauer von 120 Minuten Propylen polymerisiert.
   Dabei erhielt man 680 g Polypropylen. Der Schmelzpunkt und die Korngrößenverteilung dieses Polypropylens können zusammen mit der Katalysatorproduktivität (Menge des erhaltenen Polypropylens, bezogen auf die Menge des insgesamt verwendeten Katalysatorsystems) der nachfolgenden Tabelle entnommen werden.

### Beispiel 2

A. Voraktivierung
Analog dem Beispiel 1 wurden 9,1 mg (0,018 mmol) Dimethylsilandiylbis-(indenyl)zirkoniumdichlorid mit einer 1,6 molaren Lösung von 0,46 g Methylalumoxan (durchschnittliche Kettenlänge m = 17) in 5 ml Toluol vermischt. Die dabei erhaltene Lösung wies ein atomares Verhältnis zwischen Aluminium und Zirkonium von 400 : 1 auf.
B. Trägerung
Analog dem Beispiel 1 wurde die aus dem Voraktivierungsschritt erhaltene Lösung mit 1 g des entsprechenden Polypropylengrießes vereinigt.
Dabei erhielt man ein geträgertes Katalysatorsystem aus 1,0 g Polypropylengröße und 0,5 g des eigentlichen Katalysators aus dem Zirkoniumkomplex und dem Methylalumoxan. Das geträgerte Katalysatorsystem konnte 2 Monate lang aufbewahrt werden, ohne daß dabei seine Aktivität merklich abnahm.
C. Polymerisation
Analog dem Beispiel 1 wurde mit Hilfe von 1,5 g des aus B erhaltenen, geträgerten Katalysatorsystems und einer Suspension aus 0,9 g des gleichen, in A verwendeten Methylalumoxans in 20 ml Heptan Propylen polymerisiert. Im Unterschied zu Beispiel 1 erfolgte die Polymerisation dabei aus der Gasphase heraus bei einer Temperatur von 70°C, einem Druck von 28 bar und in Abwesenheit von flüssigem Propylen. Das atomare Verhältnis zwischen Aluminium und Zirkonium betrug im Polymerisationsreaktor 1202:1.
Nach einer Polymerisationszeit von 120 Minuten erhielt man 370 g Polypropylen. Der Schmelzpunkt und die Korngrößenverteilung dieses Polypropylens können zusammen mit der Katalysatorproduktivität (Menge des erhaltenen Polypropylens, bezogen auf die Menge des insgesamt verwendeten Katalysatorsystems) der nachfolgenden Tabelle entnommen werden.

**Tabelle**

| Eigenschaften des Polypropylens | Beispiel 1 | Beispiel 2 |
|---|---|---|
| Schmelzpunkt [°C] | 140 | 133 |
| Kornverteilung [%] | | |
| > 2 mm | 22,9 | 60,4 |
| > 1 mm - 2 mm | 30,9 | 28,0 |
| > 0,5 mm - 1,0 mm | 13,7 | 8,4 |
| > 0,25 mm - 0,5 mm | 5,4 | 2,3 |
| > 0,125 mm - 0,25 mm | 5,6 | 0,9 |
| < 0,125 mm | 21,6 | 0,0 |
| Produktivität des Katalysators [g/g] | 404 | 261 |

Unter Produktivität des Katalysators wird dabei in der vorstehenden Tabelle die Menge des erhaltenen Polypropylens, bezogen auf die eingesetzte Menge des Zirkoniumkomplexes und des Methylalumoxans, verstanden.

## Patentansprüche

1. Isolierte, geträgerte Katalysatorsysteme zur Polymerisation von C₂- bis C₁₀-Alk-1-enen, enthaltend als aktive Bestandteile eine Komplexverbindung von Metallen der IV. und V. Nebengruppe des Periodensystems und eine oligomere Alumoxanverbindung, erhältlich durch
a) Vermischen der Komplexverbindung von Metallen der IV und V. Nebengruppe des Periodensystems der Formel I 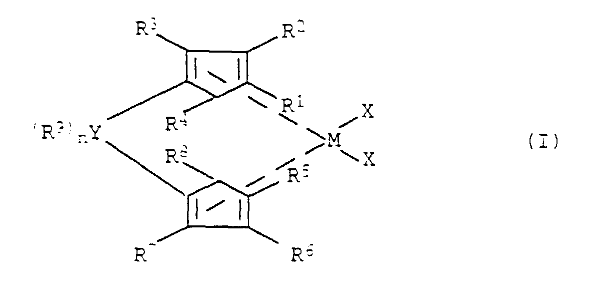 in der die Substituenten folgende Bedeutung haben:
R¹ bis R³, R⁵ bis R⁷ Wasserstoff, C₁- bis C₁₀-Alkyl, 5- bis 7-gliedriges Cycloalkyl, das seinerseits ein C₁- bis C₆-Alkyl als Substituent tragen kann, C₆- bis C₁₅-Aryl oder Arylalkyl, wobei gegebenenfalls auch zwei benachbarte Reste R¹ und R², R² und, R³, R⁵ und R⁶ und R⁷ gemeinsam für ungesättigte, 4 bis 15 C-Atome aufweisende cyclische Gruppen stehen können,
R⁴, R⁸ Wasserstoff, C₁- bis C₄-Alkyl,
R⁹ C₁- bis C₈-Alkyl, C₃- bis C₁₀-Cycloalbzyl, C₆-bis C₁₀-Aryl,
M Titan, Zirkonium, Hafnium, Vanadium, Niob, Tantal,
Y Silicium, Germanium, Zinn, Schwefef, Kohlenstoff
X Fluor, Chlor, Brom, Jcd oder C₁- bis C₈-Alkyl
und n für die Zahlen 0, 1 oder 2 steht, mit einer Lösung der oligomeren Alumoxanverbindung,
und b) anschließendes Vereinigen des so erhaltenen Gemischs mit feinteiligem Polymerisat und Verdampfen des Lösungsmittels.

2. Katalysatorsysteme nach Anspruch 1, erhältlich durch Vermischen der Komplexverbindung der Formel I mit der oligomeren Alumoxanverbindung für einen Zeitraum von 1 bis 120 Minuten.

3. Katalysatorsysteme nach den Ansprüchen 1 oder 2, dadurch gekennzeichnet, daß das feinteilige Polymerisat Korngrößen im Bereich von 0,01 bis 1 mm hat.

4. Katalysatorsysteme nach den Ansprüchen 1 bis 3, dadurch gekennzeichnet, daß das feinteilige Polymerisat ein Polyolefin ist.

5. Katalysatorsysteme nach den Ansprüchen 1 bis 4, dadurch gekennzeichnet, daß das feinteilige Polyolefin Polypropylen ist.

6. Katalysatorsysteme nach den Ansprüchen 1 bis 5, dadurch gekennzeichnet, daß das atomare Verhältnis zwischen Aluminium aus der Oligomeren Alumoxanverbindung und dem Übergangsmetall aus der Komplexverbindung der Formel I im Bereich von 10:1 bis 10⁶:1 liegt.

7. Verfahren zur Herstellung von isolierten, geträgerten Katalysatorsystemen zur Polymerisation von C₂- bis C₁₀-Alk-1-enen, enthaltend als aktive Bestandteile eine Komplexverbindung von Metallen der IV. und V. Nebengruppe des Periodensystems und eine oligomere Alumoxanverbindung, dadurch gekennzeichnet, daß man zunächst a) die Komplexverbindung von Metallen der IV. und V. Nebengruppe des Periodensystems der Formel I 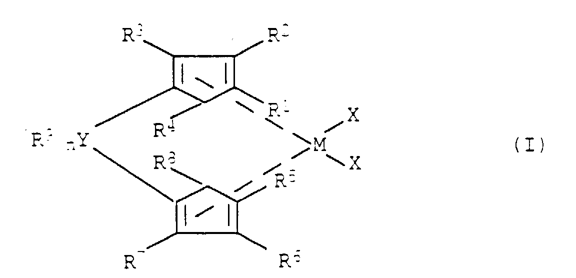 in der die Substituenten folgende Bedeutung haben:
R¹ bis R³, R⁵ bis R⁷ Wasserstoff, C₁- bis C₁₀-Alkyl, 5- bis 7-gliedriges Cycloalkyl, das seinerseits ein C₁- bis C₆-Alkyl als Substituent tragen kann, C₆- bis C₁₅-Aryl oder Arylalkyl, wobei gegebenenfalls auch zwei benachbarte Reste R¹ und R², R² und R³, R⁵ und R⁶ und R⁷ gemeinsam für ungesättigte, 4 bis 15 C-Atome aufweisende cyclische Gruppen stehen können,
R⁴, R⁸ Wasserstoff, C₁- bis C₄-Alkyl,
R⁹ C₁- bis C₈-Alkyl, C₃- bis C₁₀-Cycloalkyl, C₆-bis C₁₀-Aryl,
M Titan, Zirkonium, Hafnium, Vanadium, Niob, Tantal,
Y Silicium, Germanium, Zinn, Schwefel, Kohlenstoff
X Fluor, Chlor, Brom, Jod oder C₁- bis C₈-Alkyl
und n für die Zahlen 0, 1 oder 2 steht, mit einer Lösung der oligomeren Alumoxanverbindung vermischt, anschließend b) das dabei erhältliche Gemisch mit feinteiligem Polymerisat vereinigt und das Lösungsmittel verdampft.

8. Verfahren zur Herstellung von Polymerisaten von C₂- bis C₁₀-Alk-1-enen bei Drücken von 1 bis 3000 bar und Temperaturen von 0 bis 300°C, dadurch gekennzeichnet, daß man mit Hilfe der Katalysatorsysteme gemäß den Ansprüchen 1 bis 6 die C₂-bis C₁₀-Alk-1-ene polymerisiert.

## Claims

1. An isolated, supported catalyst system for polymerizing C₂-C₁₀-alk-1-enes, comprising as active constituents a complex of a metal of transition group IV or V of the Periodic Table and an oligomeric aluminoxane compound and obtainable by
a) mixing the complex of a metal of transition group IV or V of the Periodic Table having the formula I 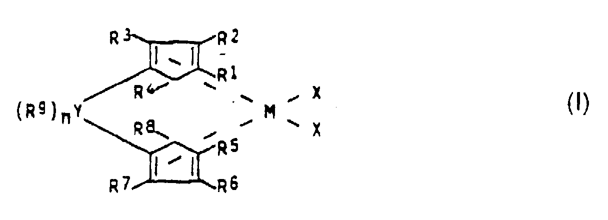 where the substituents have the following meanings:
R¹ to R³, R⁵ to R⁷ are hydrogen, C₁-C₁₀-alkyl, 5- to 7-membered cycloalkyl which may in turn bear a C₁-C₆-alkyl group as substituent, C₆-C₁₅-aryl or arylalkyl, where two adjacent radicals R¹ and R², R² and R³, R⁵ and R⁶ and R⁷ may also together form an unsaturated cyclic group having from 4 to 15 carbon atoms,
R⁴, R⁸ are hydrogen, C₁-C₄-alkyl,
R⁹ is C₁-C₈-alkyl, C₃-C₁₀-cycloalkyl, C₆-C₁₀-aryl,
M is titanium, zirconium, hafnium, vanadium, niobium, tantalum,
Y is silicon, germanium, tin, sulfur, carbon,
X is fluorine, chlorine, bromine, iodine or C₁-C₈-alkyl
and n is 0, 1 or 2, with a solution of the oligomeric aluminoxane compound,
and b) subsequently combining the mixture thus obtained with finely divided polymer and evaporating the solvent.

2. A catalyst system as claimed in claim 1 obtainable by mixing the complex of the formula I with the oligomeric aluminoxane compound for a period of from 1 to 120 minutes.

3. A catalyst system as claimed in claim 1 or 2, wherein the finely divided polymer has particle sizes in the range from 0.01 to 1 mm.

4. A catalyst system as claimed in any of claims 1 to 3, wherein the finely divided polymer is a polyolefin.

5. A catalyst system as claimed in any of claims 1 to 4, wherein the finely divided polyolefin is polypropylene.

6. A catalyst system as claimed in any of claims 1 to 5, wherein the atomic ratio of aluminum from the oligomeric aluminoxane compound to the transition metal from the complex of the formula I is in the range from 10:1 to 10⁶:1.

7. A process for preparing an isolated, supported catalyst system for polymerizing C₂-C₁₀-alk-1-enes, comprising as active constituents a complex of a metal of transition group IV or V of the Periodic Table and an oligomeric aluminoxane compound, which comprises first a) mixing the complex of a metal of transition group IV or V of the Periodic Table having the formula I 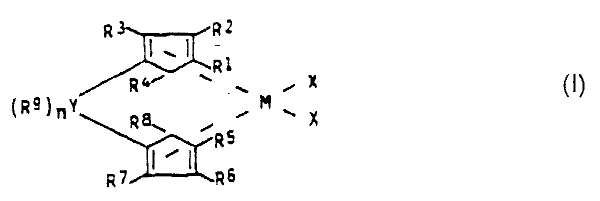 where the substituents have the following meanings:
R¹ to R³, R⁵ to R⁷ are hydrogen, C₁-C₁₀-alkyl, 5- to 7-membered cycloalkyl which may in turn bear a C₁-C₆-alkyl group as substituent, C₆-C₁₅-aryl or arylalkyl, where two adjacent radicals R¹ and R², R² and R³, R⁵ and R⁶ and R⁷ may also together form an unsaturated cyclic group having from 4 to 15 carbon atoms,
R⁴, R⁸ are hydrogen, C₁-C₄-alkyl,
R⁹ is C₁-C₈-alkyl, C₃-C₁₀-cycloalkyl, C₆-C₁₀-aryl,
M is titanium, zirconium, hafnium, vanadium, niobium, tantalum,
Y is silicon, germanium, tin, sulfur, carbon,
X is fluorine, chlorine, bromine, iodine or C₁-C₈-alkyl
and n is 0, 1 or 2, with a solution of the oligomeric aluminoxane compound, subsequently b) combining the mixture thus obtained with finely divided polymer and evaporating the solvent.

8. A process for preparing polymers of C₂-C₁₀-alk-1-enes at from 0 to 300°C and pressures of from 1 to 3000 bar, wherein the C₂-C₁₀-alk-1-enes are polymerized using a catalyst system as claimed in any of Claims 1 to 6.

## Revendications

1. Systèmes catalytiques supportés, isolés, destinés à la polymérisation d'alc-1-ènes en C₂ à C₁₀ qui contiennent, à titre de constituants actifs, un composé complexe des métaux du IVème et du Vème sous-groupes du système périodique et un composé d'alumoxanne oligomérique, que l'on peut obtenir par
a) le mélange du composé complexe de métaux des IVème et Vème sous-groupes du système périodique de la formule I : 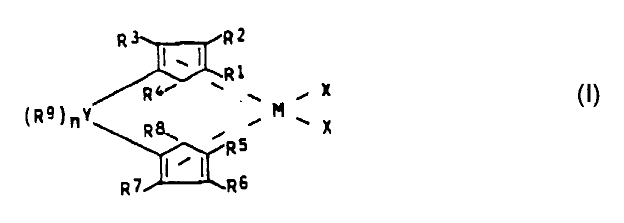 dans laquelle les substituants ont les significations qui suivent :
R¹ à R³, R⁵ à R⁷ hydrogène, alkyle en C₁ à C₁₀, cycloalkyle penta- à heptavalent, qui peut, à son tour, porter un groupe alkyle en Ci à C₆ à titre de substituant, aryle en C₆ à C₁₅ ou arylalkyle, où éventuellement aussi deux restes voisins R¹ et R², R² et R³, R⁵ et R⁶ et R⁷ peuvent représenter en commun des radicaux cycliques insaturés, présentant de 4 à 15 atomes de carbone,
R⁴, R⁸ hydrogène, alkyle en C₁ à C₄,
R⁹ alkyle en C₁ à C₈, cycloalkyle en C₃ à C₁₀, aryle en C₆ à C₁₀,
M titane, zirconium, hafnium, vanadium, niobium, tantale,
Y silicium, germanium, étain, soufre, carbone,
X fluor, chlore, brome, iode ou alkyle en C₁ à C₈,
et n est égal à 0, 1 ou 2, avec une solution du composé d'alumoxanne oligomérique;
et b) réunion subséquente du mélange ainsi obtenu avec un polymère finement divisé et évaporation du solvant.

2. Systèmes catalytiques suivant la revendication 1, que l'on peut obtenir par le mélange du composé complexe de la formule I avec le composé d'alumoxanne oligomérique pendant une période qui varie de 1 à 120 minutes.

3. Systèmes catalytiques suivant la revendication 1 ou 2, caractérisés en ce que le polymère finement divisé possède une granulométrie qui varie dans la plage de 0,01 à 1 mm.

4. Systèmes catalytiques suivant l'une quelconque des revendications 1 à 3, caractérisés en ce que le polymère finement divisé est une polyoléfine.

5. Systèmes catalytiques suivant l'une quelconque des revendications 1 à 4, caractérisés en ce que la polyoléfine finement divisée est le polypropylène.

6. Systèmes catalytiques suivant l'une quelconque des revendications 1 à 5, caractérisés en ce que le rapport atomique entre l'aluminium du composé d'alumoxanne oligomérique et le métal de transition du composé complexe de la formule I varie dans la plage de 10:1 à 10⁶:1.

7. Procédé de préparation de systèmes catalytiques supportés, isolés, destinés à la polymérisation d'alc-1-ène en C₂ à C₁₀, qui contiennent, à titre de constituants actifs, un composé complexe de métaux des IVème et Vème sous-groupes du système périodique et un composé d'alumoxanne oligomérique, caractérisé en ce que, en premier lieu, a) on mélange le composé complexe de métaux des IVème et Vème sous-groupes du système périodique de la formule I : 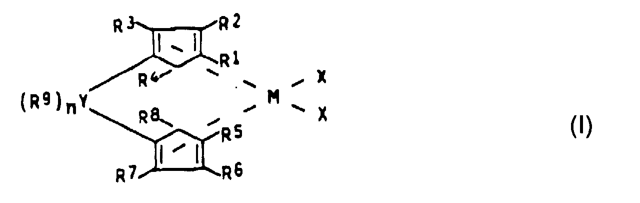 dans laquelle les substituants ont les significations qui suivent :
R¹ à R³, R⁵ à R⁷ hydrogène, alkyle en C₁ à C₁₀, cycloalkyle penta- à heptavalent, qui peut, à son tour, porter un groupe alkyle en Ci à C₆ à titre de substituant, aryle en C₆ à C₁₅ ou arylalkyle, où éventuellement aussi deux restes voisins R¹ et R², R² et R³, R⁵ et R⁶ et R⁷ peuvent représenter en commun des radicaux cycliques insaturés, présentant de 4 à 15 atomes de carbone,
R⁴, R⁸ hydrogène, alkyle en C₁ à C₄,
R⁹ alkyle en C₁ à C₈, cycloalkyle en C₃ à C₁₀, aryle en C₆ à C₁₀,
M titane, zirconium, hafnium, vanadium, niobium, tantale,
Y silicium, germanium, étain, soufre, carbone,
X fluor, chlore, brome, iode ou alkyle en C₁ à C₈,
et n est égal à 0, 1 ou 2, avec une solution du composé d'alumoxanne oligomérique, ensuite b) on réunit le mélange ainsi obtenu au polymère finement divisé et on évapore le solvant.

8. Procédé de préparation de polymères d'alc-1-ènes en C₂ à C₁₀ sous des pressions de 1 à 3000 bars et à des températures de 0 à 300°C, caractérisé en ce que l'on opère la polymérisation des alc-1-ènes en C₂ à C₁₀ à l'aide des systèmes catalytiques suivant l'une quelconque des revendications 1 à 6.
